Europäisches Patentamt

European Patent Office

Office européen des brevets

(11) Publication number: **0 331 747**
**A1**

## EUROPEAN PATENT APPLICATION
### published in accordance with Art. 158(3) EPC

(21) Application number: 88907397.9

(51) Int. Cl.⁴: **G05B 19/403 , G06F 15/16**

(22) Date of filing: 25.08.88

(86) International application number:
PCT/JP88/00848

(87) International publication number:
WO 89/02105 (09.03.89 89/06)

(30) Priority: 27.08.87 JP 2137/87

(43) Date of publication of application:
13.09.89 Bulletin 89/37

(84) Designated Contracting States:
DE FR GB

(71) Applicant: **FANUC LTD**
**3580, Shibokusa Aza-Komanba Oshino-mura**
**Minamitsuru-gun Yamanashi 401-05(JP)**

(72) Inventor: **KURAKAKE, Mitsuo**
**Izumi-Haitsu 103 3-10, Tamadaira 3-chome**
**Hino-shi Tokyo 191(JP)**
Inventor: **KINOSHITA, Jiro**
**252, Shimotsuruma**
**Yamato-shi Kanagawa 242(JP)**

(74) Representative: **Billington, Lawrence Emlyn et al**
**HASELTINE LAKE & CO Hazlitt House 28**
**Southampton Buildings Chancery Lane**
**London WC2A 1AT(GB)**

(54) **NUMERICAL CONTROLLER.**

(57) A numerical controller which controls a numerically controlled machine tool utilizing resources connected to the system bus. An additional processor is connected to the system bus to execute a predetermined task in order to assist the processing ability of the CPU. The CPU and the additional processor are not simply interfaced through the external bus but are directly connected to each other through a special interactive memory in order to enhance the numerical control capacity without decreasing the efficiency of utilizing resources in the CPU.

Fig. 1

## NUMERICAL CONTROL APPARATUS

### Technical Field

This invention relates to a numerical control apparatus having a plurality of processors which utilize a resource connected to a system bus.

### Background Art

A numerical control apparatus (NC apparatus) for controlling a machine tool uses a processor system comprising a central processing unit (CPU) for performing processing, various memories (ROM's, RAM's) connected via an internal bus for storing the system program of the NC apparatus as well as a work program, and input/output (I/O) units.

Ordinarily, a numerical control apparatus having such a processing system is such that a processor system constituted by a single processor is connected to an external bus (system bus), and various resources are connected to this system bus to broaden the capabilities of the processing system. However, with a processor system constituted by a single processor, system capability is defined by the processing capability of the CPU, so that there are cases where an NC machine tool cannot be made to execute, at the desired speed, the processing of a program commanding a complicated NC machining operation.

Accordingly, if the processing system capability is to be enhanced, an expedient is adopted in which a processor system having a construction identical with that of the main CPU is added on, and processing is divided between the respective processors to improve the processing capability.

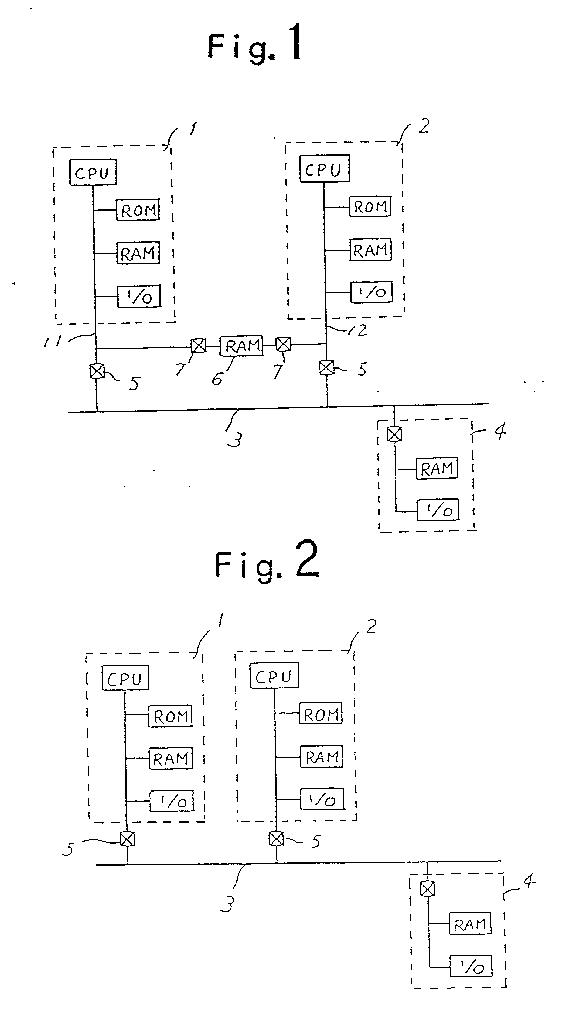

Fig. 2 is a view showing the construction of an NC apparatus in which two processors are connected to the same bus. Processors 1 and 2 each have a CPU, a ROM, a RAM and an I/O, and each utilizes a resource 4, which is connected to a system bus 3, to execute predetermined processing. The processors 1 and 2 are connected to the system bus 3 via bus intervention mechanisms 5 that control the exchange of data between the respective internal buses. By constructing a single processing system wherein the resource 4, which includes a RAM, an I/O and the like, is owned jointly by the processors 1 and 2, an NC apparatus is formed that is capable of performing the control processing of an NC machine tool, not shown.

In the above-described NC apparatus, processing is divided between the processors 1 and 2 in order to raise the processing capability. This is advantageous in that overall processing capability is improved in comparison with a case where processing is performed by a single processor of equivalent cost and greater size. However, since processing originally to be performed by a single processor is now divided, the result is a very large amount of data exchanged between the processors 1 and 2 via the system bus 3. In other words, the system bus 3 interconnecting the two processors is used with greater frequency, since data processed on the side of processor 1 is accepted on the side of processor 2 via the system bus 3, and vice versa. Consequently, even though each individual processor system is provided with extra processing capability by adding the processor 2 to the processor 1, the fact that the occupancy of the system bus 3 rises means that not that much of improvement can be expected in the processing capability of the overall processing system which includes the resource 4.

### Disclosure of the Invention

The present invention has been devised in order to solve the foregoing problems and its object is to provide a numerical control apparatus in which overall system processing capability is vastly improved in an arrangement wherein a plurality of processors are connected to the same bus to utilize a common resource.

In accordance with the invention, there can be provided a numerical control apparatus in which a plurality of processors are connected to the same bus to utilize a common resource connected to the bus, wherein data exchange means capable of performing an exchange of data between mutually adjacent processors is provided between mutually adjacent ones of the plurality of processors.

Accordingly, the numerical control apparatus of the present invention has a RAM, which is provided between mutually adjacent ones of the plurality of processors, used when data is exchanged between the processors. Whereas a bus is used for infrequent data exchanges between processors, frequent data exchanges are performed via the RAM. This makes it possible to exploit the bus effectively with regard to the resource.

### Brief Description of the Drawings

Fig. 1 is a view showing the construction of an NC apparatus illustrating an embodiment of the present invention, and

Fig. 2 is a view showing the construction of a conventional processing system.

Best Mode for Carrying Out the Invention

An embodiment of the present invention will now be described in detail with reference to the drawings.

Fig. 1 is a view showing the construction of an NC apparatus illustrating an embodiment of the present invention. In Fig. 1, numerals 1 and 2 denote processors each having a CPU, a ROM, a RAM and an I/O. A control section for an NC machine tool, not shown, is connected to the I/O, and the NC machine tool is controlled by processing executed by the processors 1 and 2.

Numerals 11, 12 denote internal buses of the respective processors 1, 2, and numeral 6 denotes a RAM serving as a conversational memory provided between the buses 11, 12. The RAM 6 is connected to the buses 11, 12 via bus intervention mechanisms 7, 7 serving as data tranceivers. When an exchange of data is performed between processors 1 and 2, infrequent data exchanges are carried out via the system bus 3, but frequent exchanges of data are carried out by a data transfer via the conversational RAM 6 without relying upon the system bus 3.

Numeral 4 denotes a resource equipped with a RAM and an I/O and connected to the processors 1 and 2 via the system bus 3. The arrangement is such that data possessed by the resource 4 is utilized in the processors 1 and 2 so that the processing capability of the processing system is improved.

In processing executed by being divided between the processors 1 and 2 in the numerical control apparatus of the embodiment thus constructed, control can be carried out in such a manner that when data processed by the processor 1 is transferred to the processor 2 in accordance with programs setting the process contents of the respective processors 1 and 2, infrequent exchanges are performed via the system bus 3, while frequently exchanged data is accepted on the side of processor 2 from bus 11 via the RAM 6 and bus 12. Conversely, with regard to data processed by the processor 2, frequently exchanged data is accepted on the side of processor 1 via the bus 12, RAM 6 and bus 11 in the same way as described above. Accordingly, data frequently exchanged by the two processors 1 and 2 is transferred exclusively via the RAM 6. Data passes through the system bus 3 only when there is a transfer of infrequent data. Thus, the system bus 3 communicating with the resource 4 can be exploited in an effective manner.

Though an embodiment of the invention has been described, the invention is not limited thereto but can be modified in various ways without departing from the scope of the claims.

Industrial Applicability

The numerical control apparatus of the invention is such that a RAM capable of performing an exchange of data between mutually adjacent processors is provided between mutually adjacent ones of a plurality of processors connected to the same bus. Accordingly, when the processors execute the processing that is, apportioned out to them, frequent data exchanges between processors are carried out via the RAM so that the bus can be effectively exploited with respect to the resource without using the bus more frequently than originally. This has the effect of raising the processing capability of the overall system sharing the resource.

**Claims**

1. A numerical control apparatus which utilizes a resource connected to a system bus for controlling a numerically controlled machine tool, comprising:
a plurality of processor systems independently connected to said system bus for executing processing apportioned out to said processor systems; and
data exchange means for directly transferring data between internal buses of said processor systems.

2. A numerical control apparatus according to claim 1, characterized in that said data exchange means is constituted by a random-access memory whose inputs and outputs are controlled by each of said processor systems.

# Fig. 1

# Fig. 2

# INTERNATIONAL SEARCH REPORT

International Application No  PCT/JP88/00848

## I. CLASSIFICATION OF SUBJECT MATTER (if several classification symbols apply, indicate all) 6

According to International Patent Classification (IPC) or to both National Classification and IPC

Int. Cl$^4$   G05B19/403, G06F15/16

## II. FIELDS SEARCHED

### Minimum Documentation Searched 7

| Classification System | Classification Symbols |
|---|---|
| IPC | G05B19/403, G06F15/16 |

### Documentation Searched other than Minimum Documentation
to the Extent that such Documents are Included in the Fields Searched 8

| | |
|---|---|
| Jitsuyo Shinan Koho | 1971 - 1988 |
| Kokai Jitsuyo Shinan Koho | 1971 - 1988 |

## III. DOCUMENTS CONSIDERED TO BE RELEVANT 9

| Category * | Citation of Document, 11 with indication, where appropriate, of the relevant passages 12 | Relevant to Claim No. 13 |
|---|---|---|
| X | JP, A, 52-36951 (Yaskawa Electric Mfg. Co., Ltd.) 22 March 1977 (22. 03. 77) Page 1, lower right column, line 12 to page 2, upper left column, line 14 & JP, B, 56-15531 | 1, 2 |
| P | JP, A, 62-219102 (Fanuc Ltd.) 26 September 1987 (26. 09. 87) Page 2, lower right column, line 10 to page 3, upper left column, line 6, Fig. 3 (Family: none) | 1, 2 |

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| November 4, 1988 (04. 11. 88) | November 21, 1988 (21. 11. 88) |

| International Searching Authority | Signature of Authorized Officer |
|---|---|
| Japanese Patent Office | |

Form PCT/ISA/210 (second sheet) (January 1985)